# EUROPEAN PATENT SPECIFICATION

(11) **EP 1 082 276 B1**
(45) Date of publication and mention of the grant of the patent: **24.07.2002**
(21) Application number: 99920808.5
(22) Date of filing: 28.04.1999
(51) Int. Cl.: C04B 28/02, C04B 24/12

(54) **SUPERFLUIDIFYING ADDITIVE FOR CEMENTITIOUS COMPOSITIONS**
SUPERVERFLÜSSIGER FÜR ZEMENTZUSAMMENSETZUNGEN
ADDITIF SUPERFLUIDIFIANT POUR COMPOSITIONS A BASE DE CIMENT

(30) Priority: 29.04.1998 IT MI980921; 09.04.1999 IT MI990727
(43) Date of publication of application: 14.03.2001
(73) Proprietor: Italcementi S.p.A., 24121 Bergamo (IT)
(72) Inventor: GOISIS, Marco, I-24124 Bergamo (IT); DE MARCO, Tiziana, I-24035 Curno (IT); PEPE, Carmine, I-24010 Ponteranica (IT); CASSAR, Luigi, I-20097 San Donato Milanese (IT)
(74) Representative: Gervasi, Gemma, Dr.
(86) International application number: EP9902870
(87) International publication number: WO9955634

(56) References cited:
- EP-A- 0 303 747
- EP-A- 0 619 277
- AT-B- 383 586
- FR-A- 2 706 447
- FR-A- 2 751 956
- US-A- 5 679 150

## Description

### Scope of the invention

The present invention regards a superfluidifying additive for cementitious compositions, characterized in that it comprises an acrylic superfluidifier in combination with a cationic additive.

### Technical problem

In order to meet the required specifications in the phase of laying of cementitious items, such as low water/binder ratio, high initial fluidity, maintenance of workability over time, and in order to bestow on the items the desired characteristics, such as high compression strength, durability, and accurate surface finish, the use of superfluidifying additives is recommended.

Acrylic superfluidifiers are particularly appreciated in that they have high fluidifying action even at low water/binder ratios and maintain workability of the mixture for periods of time sufficient for the laying of the items, where the laying comprises preparation, transportation and casting of the cementitious composition (e.g., concrete).

The use of acrylic superfluidifiers is appreciated not only on grey cements, but above all on white cements. In fact, in the case of white cements, traditional superfluidifiers, such as naphthalene sulphonate-based or lignin sulphonate-based superfluidifiers, lead to significant variations in the typical luminance of the resulting cementitious items.

Melamine products would appear to be recommended for their colour; however, they are sometimes unsuitable from the point of view of performance, in that, in combination with white cements, they exert an unsatisfactory fluidifying action already at the initial working times.

Superfluidifiers having an acrylic structure present a sufficiently light colour such as to maintain practically unaltered the degree of whiteness of hardened cementitious surfaces; however, at times they may prove unsatisfactory. In fact, although their fluidifying action is high even at low water/cement ratios (e.g., w/c ≤ 0.40), it may be found to be limited to the period alone of preparation of the mixture, considerable losses of workability occurring already within very short times (5-10 minutes) of preparation of the mixture.

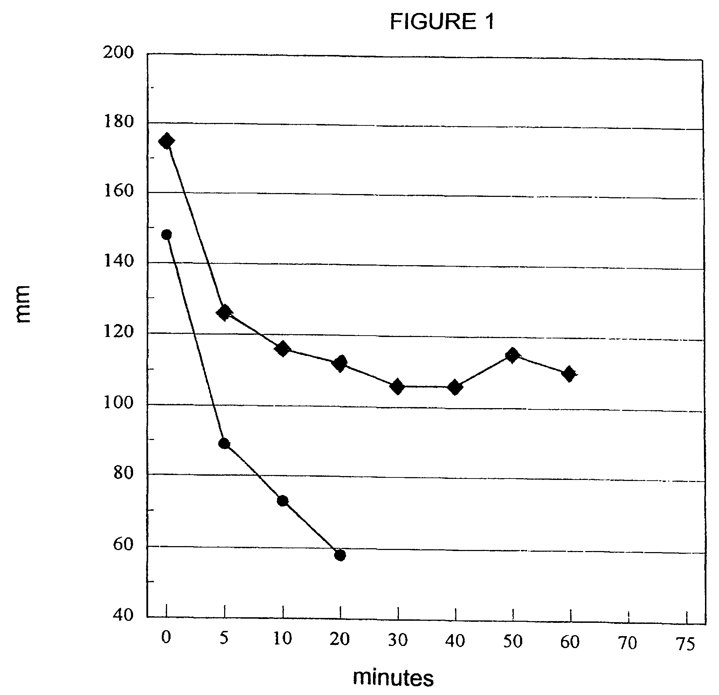

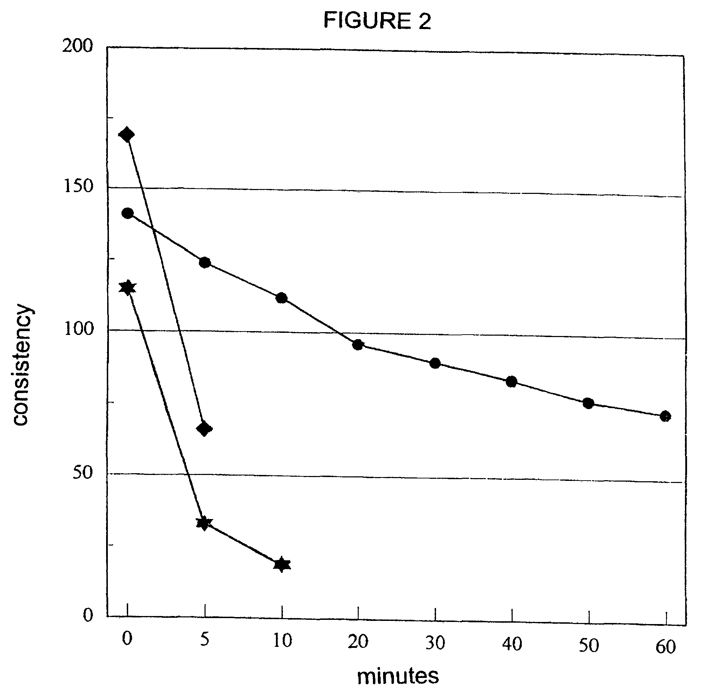

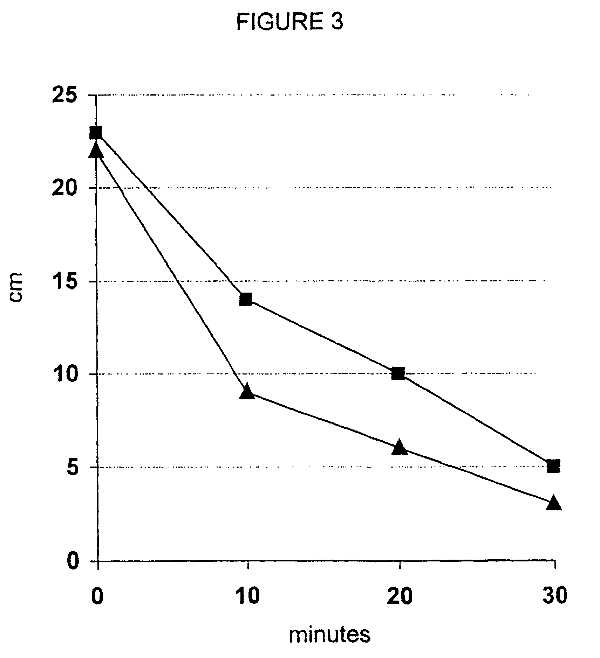

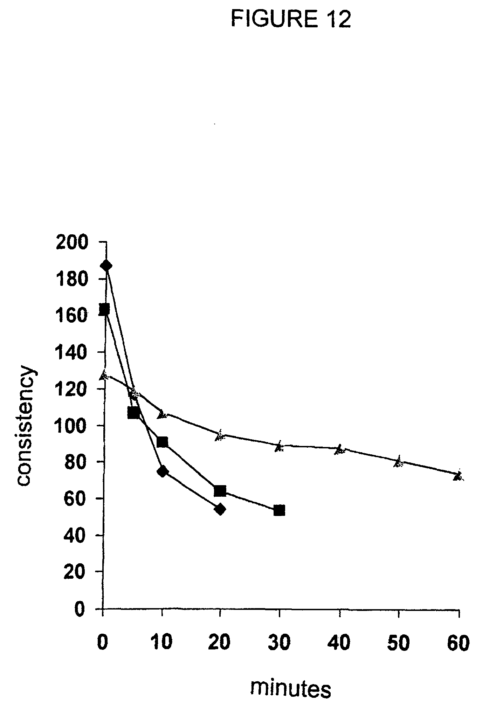

This problem is graphically illustrated in Figures 1, 2 and 3, in which the workability data over time are given, respectively, for specimens of paste, mortar, and concrete with addition of acrylic superfluidifying additives. Furthermore, as may be noted in Figure 12, the problem of loss of workability cannot be solved by increasing the dose of the acrylic superfluidifier: on the contrary, the specimen containing the higher dose of acrylate (indicated by the symbol ― ◆ ―), albeit possessing high workability at time zero, shows a greater loss of workability than the specimen containing less fluidifier or the specimen not containing any fluidifier. The loss of workability may manifest itself also as considerable stickiness of the fluid mass, which does not enable the operations of transportation, unloading and laying of the concrete to be carried out in a workmanlike manner. The remedy traditionally adopted in this situation consists in adding more water to the cementitious mixture. This, however, proves to be counterproductive in that it results in a greater porosity of the consolidated mass, and hence practically in cements which present a poorer mechanical performance and are more susceptible to phenomena of damp infiltration, degradation, corrosion of the reinforcements, etc.

In view of the limits of the prior art highlighted above, there emerges clearly the need for new efficient superfluidifying systems for cements. In particular, the need is felt for superfluidifiers that are able to meet the requirements of fluidity and workability of cementitious compositions which show considerable loss of workability over time when acrylic fluidifers are used.

### Summary

Now the applicant has unexpectedly found that the drawbacks of the known superfluidifying additives referred to above can be overcome by adopting an additive system consisting of an acrylic superfluidifier combined with an ammonium salt corresponding to the structural formula (I), a surfactant, and possibly an antifoaming additive.

This additive system, in the form of a multicomponent superfluidifying additive, constitutes a first subject of the invention. The present invention further comprises high-fluidity and high-workability cementitious compositions containing an acrylic superfluidifier, an ammonium salt described by the structural formula (I), a surfactant, and possibly an antifoaming additive.

Further aspects of the present invention are represented by premixes in the dry state and cementitious items containing an acrylic superfluidifier, an ammonium salt of formula (I), a surfactant, and possibly an antifoaming additive, by the corresponding preparation procedures, as well as by the use of the above additive system in the fluidification of cementitious mixtures.

### Description of Figures

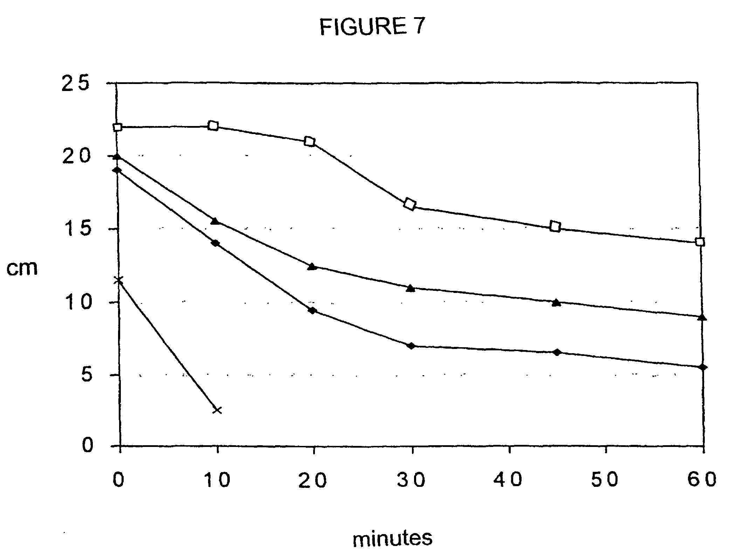

Figure 1 (reference): gives the slump values of pastes with a base of white cement (Italbianco ®), containing an acrylic additive, expressed as diameter of cone of paste as a function of time:
   ―^{•} ― : mixture containing the acrylic additive Mapefluid® X-404
   ―◆ ― : mixture containing the acrylic additive Glenium® 51.
Figure 2 (reference) gives the consistency of a specimen of mortar with a base of white cement (Italbianco ®), as a function of time, compared with the same mortar with addition of acrylic superfluidifiers: ― ^{•} ― : mortar as such ; water/binder = 0.62
   ―◆ ― : mortar + 1.0% Tupole® SSP 104 ; water/binder = 0.36
   ― 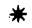 ― : mortar + 1.0% MapefluidR x 404; water/binder = 0.40
Figure 3 (reference) gives the slump of concrete with a base of white cement (Italbianco ®), with addition of two different acrylic additives, expressed as reduction in height of the cone as a function of time.
   ―■― : concrete containing 2% Glenium® 51 ; water /binder = 0.43 ;
   ―▲ ―: concrete containing 4% of Mapefluid® X-404; water/binder = 0.45.
Figures 4, 5 and 6 give the values of consistency as a function of time of mortars prepared with three different cements (two white cements Italbianco ® and a grey cement 52.5 R), with the addition of additives as follows:
   - Figure 4:
      ―◆ ― reference: mortar made using white cement Italbianco ® + 1% Mapefluid® X-404; water/binder =0.45
      ―■― : mortar made using white cement Italbianco ® premixed with 0.3% of formulation A0 + 1% Mapefluid® X-404 ; water/binder = 0.45
   - Figure 5:
      ―◆ ― reference: mortar made using white cement Italbianco ® + 1.2% Mapefluid® X-404; water/binder = 0.47
      ―▲ ―: mortar made using white cement Italbianco ® premixed with 0.3% of formulation A0 ; water/binder = 0.47
      ―■―: mortar made using white cement Italbianco ® premixed with 0.2% of formulation A0 + 1% Mapefluid® X-404; water/binder = 0.47
   - Figure 6:
      ―◆ ― reference: mortar made using grey cement 52.5 R + 1% Mapefluid® X-404; water/binder = 0.45
      ―■― : mortar made using grey cement 52.5 R premixed with 0.4% of formulation A0 + 1% Mapefluid® X-404; water/binder = 0.45
Figures 7, 8 and 9 give the slump values of concretes, expressed as reduction in the height of the cone as a function of time:
   - Figure 7 gives the data of Table 5 for specimens of concrete obtained by premixing the formulation A0 with white cement Italbianco ®: specimens 1, 2 and 3 contain the acrylic additive and the formulation A0, and specimen C1 the formulation A0 alone:
      ―◆ ― : specimen 1 ; ―□― : specimen 2 ;
      ―▲ ―: specimen 3 ; ― 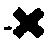 ― : specimen C1 .

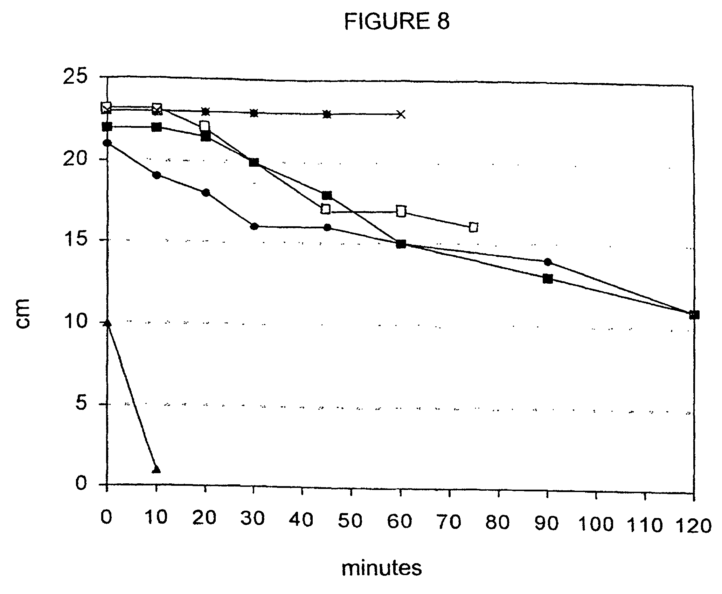

   - Figure 8 gives the data of Table 6 for specimens obtained by mixing with white cement the metakaolin to which the formulation A0 had been pre-added: specimens 5-8 contain the acrylic additive and the formulation A0, and specimens C2-C3 contain the formulation A0 alone:
      ―◆ ― : specimen 5 ; ―□― : specimen 6 ;
      ―■― : specimen 7 ; ―^{•} ― : specimen 8 ;
      ―▲ ―: specimen C2 ; ― 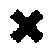 ― : specimen C3;

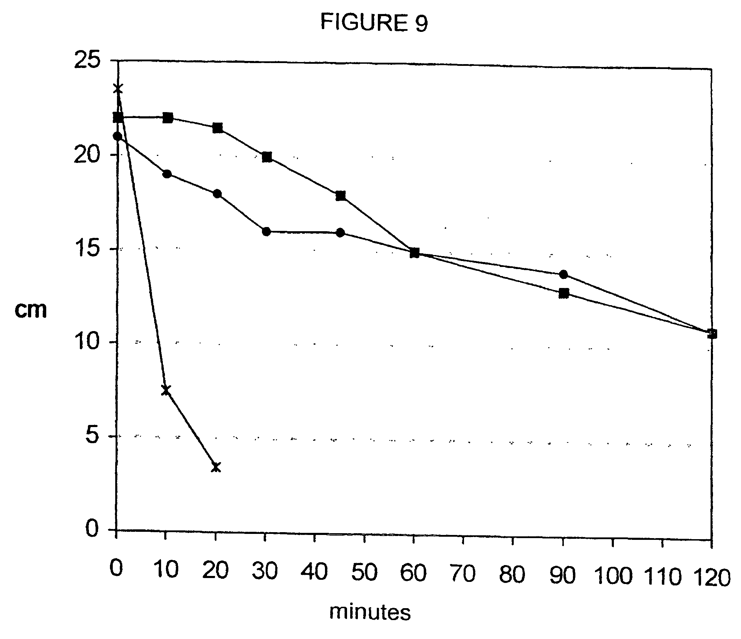

   - Figure 9 gives the slump values of Table 6 for the specimens of concrete 7 and 8 referred to above, compared with a specimen of concrete to which the acrylic additive alone had been added:
      ―■― : specimen 7 ; ―^{•} ― : specimen 8 ;
      ― 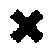 ― : specimen with addition of the acrylic additive alone (3% of acrylic additive; water/binder = 0.4).

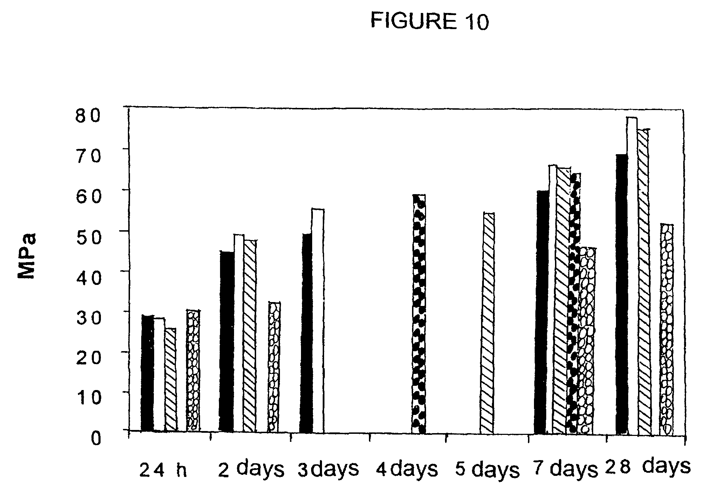

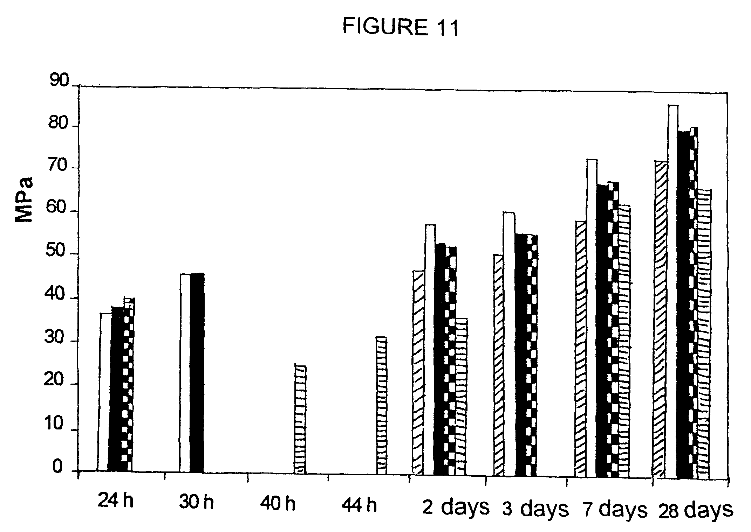

Figures 10 and 11 give the values of compression strength of test specimens of concrete as a function of time:
   - Figure 10 gives the data of Table 7 for specimens of concrete obtained by premixing the formulation A0 with white cement Italbianco ®: specimens 1, 2, 3 and 4 contain the acrylic additive and the formulation A0, whilst specimen C1 contains the formulation A0 alone:
      ■ : specimen 1 ; □: specimen 2 ;
      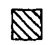 :: specimen 3 ; 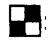 : specimen 4 ; 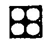 : specimen C1 ;
   - Figure 11 gives the data of Table 8 for specimens of concrete obtained by pre-dispersion of the formulation A0 in the metakaolin:
      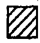 : specimen 5 ; □ : specimen 6 ; ■ : specimen 7 ;
      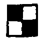 : specimen 8 ; 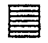 : specimen C3.
Figure 12 (reference)
   Consistency of a specimen of mortar with a base of white cement (Italbianco ®) as a function of time, compared with the same mortar with addition of an acrylic superfluidifying additive:
   ―▲ ― mortar as such, w/c = 0.60;
   ―■― mortar + 1% of acrylic superfluidifier (Superflux 2000AC), w/c ratio = 0.45;
   ―◆ ― mortar + 1.3% of acrylic superfluidifier (Superflux 2000AC), w/c ratio = 0.41.
Figures 13, 14, 15 and 16
   Consistency as a function of time (workability curve) of white cement-based mortar specimens (EXAMPLE II), prepared with same w/c ratio of 0.45 and with addition of the additive system, as compared to the same mortar with addition of acrylic superfluidifier alone.
   Fig. 13
      ―■― Reference: mortar with addition of 1% of acrylic superfluidifier (Superflux 2000AC);
      ―◆ ― mortar with addition of 0.3% of formulation At + 1% of acrylic superfluidifier (Superflux 2000AC);
      ―▲ ― mortar with addition of 0.3% of formulation A2 + 0.8% of acrylic superfluidifier (Superflux 2000AC).
   Fig. 14
      ―■― Reference: mortar with addition of 1% of acrylic superfluidifier (Mapefluid X404);
      ―▲ ― mortar with addition of 0.3% of formulation A3 + 1% of acrylic superfluidifier (Mapefluid X404);
      ―◆ ― mortar with addition of 0.3% of formulation A4 + 1% of acrylic superfluidifier (Mapefluid X404);
      ― 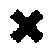 ― mortar with addition of 0.3% of formulation A5 + 1% of acrylic superfluidifier (Mapefluid X404).
   Fig. 15
      ―■― Reference: mortar with addition of 1% of acrylic superfluidifier (Mapefluid X404);
      ―◆ ― mortar with addition of 0.3% of formulation A6 + 1% of acrylic superfluidifier (Mapefluid X404);
      ―▲ ― mortar with addition of 0.3% of formulation A7 + 1% of acrylic superfluidifier (Mapefluid X404);
   Fig. 16
      ―■― Reference: mortar with addition of 1% of acrylic superfluidifier (Mapefluid X404);
      ―▲ ― mortar with addition of 0.3% of formulation A8 + 1% of acrylic superfluidifier (Mapefluid X404);
      ―◆ ― mortar with addition of 0.3% of formulation A9 + 1% of acrylic superfluidifier (Mapefluid X404).
Figures 17 and 18
   Consistency as a function of time of specimens of mortar with a base of grey cement 52.5 R (EXAMPLE III), prepared with the same w/c ratio of 0.45 and with addition of the additive system, as compared to the same mortar with addition of acrylic superfluidifier alone.
   Fig. 17
      ―■― Reference: mortar with addition of 1% of acrylic superfluidifier (Superflux 2000AC);
      ―◆ ― mortar with addition of 0.5% of formulation A1 + 0.5% of acrylic superfluidifier (Superflux 2000AC).
   Fig. 18
      ―■― Reference: mortar with addition of 1% of acrylic superfluidifier (Superflux 2000AC);
      ―◆ ― mortar with addition of 0.5% of formulation A10 + 0.5% of acrylic superfluidifier (Superflux 2000AC);
      ―▲ ― mortar with addition of 0.5% of formulation A11 + 0.5% of acrylic superfluidifier (Superflux 2000AC).
   Figure 19
      Slump loss of a specimen of white cement-based concrete (EXAMPLE IV), prepared with same w/c ratio of 0.38 and with addition of the additive system, as compared to the same concrete with addition of acrylic superfluidifier alone.
      ―■― Reference: concrete with addition of 2.5% of acrylic superfluidifier (Mapefluid X404);
      ―▲ ― Concrete with addition of 0.65% of formulation A5 + 2% of acrylic superfluidifier (Mapefluid X404).

### Detailed description of the invention

The subject of the present invention is an additive system for cementitious compositions, comprising at least one acrylic superfluidifier, at least one ammonium salt of formula (I), at least one surfactant, and possibly at least one antifoaming additive.

The first element of the present additive system consists of one or more ammonium salts corresponding to the following structural formula (I): 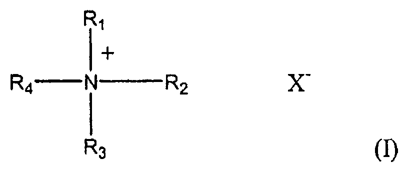 where:
R₁, R₂, R₃, independently of one another, are chosen from among:
- hydrogen,
- a saturated or unsaturated, linear or branched alkyl group having from 1 to 22 carbon atoms, preferably from 1 to 16,
- a polyoxyalkylene chain containing n repetitive units of structural formula (II), and m repetitive units of structural formula (III) 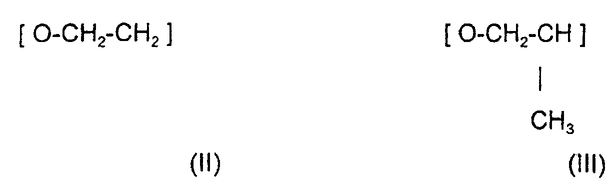 where *m* and *n*, independently of one another, are integers comprised between 0 and 50, and (*m* + *n*) is an integer comprised between 2 and 50, and where the said units may be present randomly in the said chain;
- a saturated or unsaturated, linear or branched alkyl group having from 1 to 22 carbon atoms, preferably from 12 to 18, possibly substituted with one or more polyoxyalkylene chains as defined above;
and R₄ is chosen from between:
- a group having -(CH₂)ₚ N R₅R₆ structure, where p is an integer comprised between 1 and 7, and in which R₅ and R₆ may be, independently of one another: (i) hydrogen, (ii) saturated or unsaturated, linear or branched alkyl groups having from 1 to 22 carbon atoms, or (iii) a polyoxyalkylene chain as defined above;
- a saturated or unsaturated, linear or branched alkyl group having from 1 to 12 carbon atoms, preferably from 1 to 4;
and where X⁻ is an anion which neutralizes, either partially or totally, the charge of the ammonium ion.

X⁻ ions preferred for the purposes of the invention are the hydroxide ion and the R₇-COO⁻ ion, in which R₇ is a saturated or unsaturated, linear or branched alkyl group having from 1 to 22 carbon atoms, preferably from 9 to 20, such as the oleate, stearate or linoleate ion.

The ammonium salt of structure (I) is obtained through partial or total salification of an amine by a protonic acid, used in any molar ratio.

Preferred ammonium salts according to formula (I) are those in which the cation is represented by: triethyl ammonium, tetramethyl ammonium, hexadecyltrimethyl ammonium, or else the ammonium ions derived from an ethoxylated primary amine and containing a C₁₄-C₁₈ alkyl chain, such as the products marketed by D.A.C. under the name Diammin.

The above polyoxyalkylene chains are bound to the compound of formula (I) by means of the oxygen atom of the last oxyethylene unit (II) or oxypropylene unit (III), whilst the terminal unit at the other end of the chain has a CH₃-CH₂-O- structure (in the case of oxyethylene chains) or a CH₃-CH₂-CH₂-O- structure (in the case of oxypropylene chains).

Preferably, the polyoxyalkylene chain consists of *n* units of formula (II)
where n is comprised between 2 and 15.

When R₄ is a group of -(CH₂)ₚ N R₅R₆ structure, the nitrogen atom belonging to it may, according to the environmental pH, be present in the neutral form, as represented above, or in the form of -(CH₂)ₚ NH⁺ R₅R₆ ammonium ion. In the latter case, the compound of formula (I) is in the form of a bivalent di-ammonium cation. A preferred class of ammonium salts included in the general formula (I) is that in which the ammonium ion corresponds to the structural formula (la) 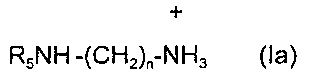 where R₅ and *n* have the meanings specified above; preferably, R₅ is a saturated or unsaturated, linear or branched alkyl group containing from 8 to 22 carbon atoms. The ammonium ion of formula (Ia) is either partially or totally neutralized by the X⁻ anion, where X has the meanings specified above. Also the derivatives of formula (Ia) may appear in the form indicated above of di-ammonium salts, i.e., where also the nitrogen atom bound to R₅ is in the protonated form.

Preferred ammonium salts of formula (la) are diamine dioleates, marketed by the firm C.E.C.A. under the name of Inipol.

The second element of the additive system which is the subject of the present invention consists of one or more surfactants. The surfactant may be any surfactant, ionic or cationic, amphoteric or non-ionic.

Preferably, a non-ionic surfactant is used, with a hydrophilic-lipophilic balance (HLB) value of between 5.5 and 15. Among non-ionic surfactants, those having a polyoxyethylene and/or polyoxypropylene structure may be cited, in particular those containing from 2 to 9, for example 5 or 6, ethylene oxide units, generally alkoxylated at least at one end of the polymer chain, for example polyoxyethylene glycol mono-ethers with a fatty alcohol, having, for example from 8 to 22 carbon atoms, or with a phenol possibly substituted with at least one C₈-C₂₂ alkyl residue, for instance nonyl. Examples of non-ionic surfactants useful for the purposes of the present invention are the nonylphenol polyoxyethylene having 5 ethylene oxide units marketed by CONDEA Chimica D.A.C. under the name Nonfix 5, and the nonylphenol polyoxyethylene having 6 ethylene oxide units marketed by WITCO Chimica D.A.C. under the name Syntopon A.

Further examples of non-ionic surfactants are alcohols, preferably linear ones, ethoxylated with 3-8 moles of ethylene oxide, or else isodecyl alcohol ethoxylated with 4-8 moles of ethylene oxide. These products are marketed by D.A.C under the name Biodac® (e.g., Biodac 2/32).

Among anionic surfactants may be cited Fenopon® 128 (GAF), having an R₈O(CH₂CH₂O)ₙ₋₁CH₂CH₂OSO₃⁻ NH₄⁺ structure. Examples of cationic surfactants are the compounds of formula R₈N(CH₃)₂CH₂C₆H₅ .Cl⁻ (R₈ is H or C₁-C₄ alkyl), marketed by C.E.C.A. under the name Noramium®.

The third element of the additive system which is the subject of the present invention consists of one or more acrylic superfluidifying additives. Belonging to this class are additives containing polymers, terpolymers or copolymers of acrylic acid or methacrylic acid, or other carboxylic acids or corresponding anhydrides containing a polymerizable ethylene unsaturation (for example, fumaric acid, oleic acid, itaconic acid, crotonic acid, aconitic acid, sinapic acid, mesaconic acid, undecylenic acid, angelic acid, hydroxyacrylic acid, maleic anhydride), or the corresponding salts and esters, and their mixtures.

Examples of acrylic polymers and copolymers useful for the purpose of the present invention are given below, with the bibliographical references describing them, incorporated for reference in the present patent application:
- copolymers between a) acrylic or methacrylic acid and b) a hydroxy-(C₂-C₃)-alkyl ester of the acrylic or methacrylic acid, described in EP-A-303,747 ;
- mixtures comprising at least one copolymer of alkenyl ethers of formula (I), at least one polyalkenyl ether of formula (II), and maleic anhydride, the corresponding products of hydrolysis or the salts of said products of hydrolysis, described in EP-A-619.277;
- superplasticizing additives obtained by terpolymerizing the monomers of formula (IV), (V) or (VI), described in EP-A-612.702;
- copolymers of formula (I) described in JP 6048797;
- polymer salts formed by reaction of a polycarboxylic acid with an acrylic polymer containing nitrogen, typically in aqueous solution, described in FR 2.656.297;
- polymeric compositions of a maleic acid mono-ester with a compound of formula (I), and of a monomer of formula (II), defined in FR 2.668.773 ;
- copolymers in the form of free acids or salts, containing three types of monomers, defined in FR 2.671.090 ;
- dispersing agents comprising water-soluble vinyl copolymers obtained by radical co-polymerization in aqueous solution of monomers of formulas (1), (2), (3), (4), and (5), described in EP-A-590.983;
- water-soluble vinyl copolymers represented by linear copolymers between vinyl acetate and N-substituted maleamic acid, having formula (A), described in EP-A1-604.676 ;
- copolymers of the monomers A), B), C) and D), defined in EP-A1-610.699;
- polymers or copolymers of ethylene carboxylic acids chosen from among acrylic acid, methacrylic acid, fumaric acid, aleic acid, itaconic acid, crotonic acid, aconitic acid, sinapic acid, mesaconic acid, undecylenic acid, angelic acid, hydroxyacrylic acid, and maleic anhydride, described in FR-A1-2.699.915;
- an additive for the control of fluidity of cementitious compositions, containing at least one copolymer made up of a monomer a) of an ester of alkylene-glycol monomethacrylic acid of formula (I) and a monomer b) of a methacrylic acid of formula (II), or else a copolymer made up of a monomer d) having a base of an alkoxypolyalkylene-glycol monomethylallyl ether of formula (III) and a monomer b) having a base of methacrylic acid of formula (IV), defined in FR -A1-2.706.447;
- copolymers or corresponding salts containing i) 33-95 mol% of a carboxylic acid with polymerizable ethylene unsaturation, and ii) 5-67 mol% of a carboxylic-acid ester with polymerizable ethylene saturation, as described in US 5,047,087 and in US 4,473,406, in which the unsaturated carboxylic acid is preferably acrylic acid, methacrylic acid, crotonic acid, fumaric acid, itaconic acid, citraconic acid, aconitic acid or maleic acid.

The acrylic additive is, for example, chosen from among the commercial products listed below, together with the corresponding manufacturer's name, and, where available, with the type of polymer or copolymer contained in these products and the bibliographical references regarding their structure and preparation, incorporated for reference in the present patent application:: Mapefluid® X-404 (Mapei, polyethylene oxide and copolymer of sodium methacrylate and polyethylene oxide methacrylate, EP-A-612.702); Tupole® SSP-104 (Takemoto Oil & Fat, terpolymer consisting of sodium acrylate, sodium methacrylate and polyethylene oxide, EP-A-590.983); Darex Super® 200 (Denka Grace, copolymer between ethylene oxide and maleic anhydride, EP-A-0619277); Narlex® LD-36V and LD-38SF (National Starch, acrylic acid copolymers, USP 4.473.406); Glenium® 51 (MAC-MTB, ethers of polycarboxylic acids, FR-2.656.297), Sokalan® HP 80 (BASF).

Other examples of commercial acrylic-based additives useful for the purposes of the present invention are Cimfluid® 2000 AC (AXIM, polyethylene oxide and copolymer of sodium methacrylate and polyethylene oxide methacrylate); PPE 1179 (National Starch & Chemical, copolymers of acrylic acid partially neutralized with triethanol amine); CAD-8000 (Kao Corporation); Tupole® HP-11 (Takemoto Oil & Fat, polycarboxylic acid); CM1142 (Bozzetto); Superflux ® 2000 AC (Italeux, polyethylene oxide and copolymer of sodium methacrylate and polyethylene oxide methacrylate).

The additive system which is the subject of the present invention preferably contains at least one antifoaming additive. The antifoaming additive may be chosen from among various antifoaming additives for cements; for example, it may be a copolymer between units of ethylene oxide and propylene oxide, etherified at the start of the polymer chain with a C₂-C₂₀ aliphatic alcohol, as described in the international patent application PCT/EP97/00026 in the name of the present applicant, having in particular a molecular weight of approximately 1050, a propylene oxide unit / ethylene oxide unit ratio of 3, etherified with an aliphatic alcohol having from 10 to 14 carbon atoms, typically 13, such as the product Airplast®, marketed by Hispano Quimica.

In addition, the antifoaming agent may be a polymer obtained by direct condensation between stearic acid and propylene oxide, such as the product Koster ® K/9 P, marketed by D.A.C.

Further subjects of the invention are the following: high-fluidity and high-workability cementitious compositions containing the additive system described above, and the process for their preparation; dry pre-mixes containing the additive system described above, suitable for forming the aforementioned cementitious compositions; cement items made starting from the above-mentioned cementitious compositions; and use of the additive system described above in the fluidification of cementitious compositions.

In the present text, by cementitious compositions are meant cementitious mixtures comprising at least one hydraulic binder, water, and possibly: one or more inert aggregates, and/or one or more mineral additives, and/or fibres for cement, and/or one or more conventional additives.

By hydraulic binder is meant a material in the form of powder in the dry state, which, when mixed with water, yields plastic mixtures able to solidify and harden over time. By cements are meant in particular those included in the UNI ENV 197.1 standard.

The cementitious compositions are divided into pastes (compositions devoid of inert aggregates) and conglomerates (compositions containing at least one inert aggregate). The conglomerates in turn are divided into mortars (containing fine aggregates, for example sand) and concretes (containing both fine aggregates and coarse aggregates, such as gravel, pebbles, and crushed stones, chosen, for example, from among those classified according to the UNI 8520 standard). The present invention refers in particular to mortars and concretes.

By mineral additive is meant any type of finely ground inorganic material that may be added to the concrete to bestow on it better characteristics of resistance and durability.

The additives may be inert, porcelain-type, or with latent hydraulic activity.

For the purposes of the present invention, preferred mineral additives are metakaolin, limestone, fly ash, blast-furnace slag, porcelain (either natural or artificial), and fine silica.

The fibres for cements may be natural or artificial, inorganic or organic. Examples of inorganic natural fibres are: asbestos, sepiolite and wollastonite; examples of organic natural fibres are: cotton, wool, jute, flax, hemp, sisal, and cellulose fibres; inorganic artificial fibres include, for example: glass, rock, slag, basalt, ceramics, calcium silicate, silicon carbide, and carbon; organic artificial fibres may be, for example: nylon, rayon, polyacrylonitrile, polyvinyl alcohol, polyethylene, and polypropylene.

Further fibres for cements may be of a metallic nature, for example steel. Conventional additives are those normally contained in cementitious compositions, such as: retarders, accelerators, water reducers, pumping adjuvants, and corrosion inhibitors.

A further subject of the present invention is represented by dry pre-mixes containing the superfluidifying additives described above. The dry pre-mixes are compositions in the dry state which, by the addition water, are directly converted into cementitious compositions ready for laying. Hence, the dry pre-mixes comprise at least one hydraulic binder as defined above, and possibly one or more inert aggregates, fibres for cements, and/or one or more mineral additives, and/or conventional additives, as defined above.

Further examples of conventional additives are: shrinkage compensators, aerating agents, water retainers (e.g., cellulose ethers), retarders or accelerators.

By cementitious items are meant items obtained from cementitious compositions prepared, laid and left to harden.

Particular embodiments of the present invention are represented by cementitious compositions, cementitious items, and dry pre-mixes containing the additive that is the subject of the present invention and at least one photocatalyst able to oxidize, in the presence of light, air and environmental humidity, the polluting substances present in the environment.

In the said compositions, cementitious items or dry pre-mixes, the photocatalyst is preferably represented by titanium dioxide or one of its precursors, prevalently (for example for at least 70%) in the form of anatase. Preferably, the photocatalyst is distributed evenly in the entire cementitious mass. In this case, the cementitious items contain the photocatalyst in bulk, thus avoiding the need for application of cementitious coatings containing the photocatalyst. Examples of pre-mixes, compositions and items containing in bulk particles of photocatalyst are those described in the international patent application WO 98/06601 (PCT/EP97/04008), incorporated by reference in the present application.

The high-fluidity and high-workability cementitious compositions that are the subject of the present invention contain the components of the additive system preferably in the following weight percentages which refer to the weight of the hydraulic binder in the dry state:
ammonium salt: from 0.04% to 1%, more preferably 0.12% - 0.30%;
surfactant: between 0.04% and 1%, more preferably 0.12%-0.30%;
antifoaming agent: between 0.02 % and 0.3%, more preferably 0.06 -0.15%;
acrylic superfluidifier: from 0.3% to 3%, more preferably between 0.5% and 2.5%.

The additive system that is the subject of the invention is preferably produced in the form of two separate formulations, A and B, which may be added separately to the cementitious compositions, where:
formulation A comprises the ammonium salt of formula (I), the surfactant, and the possible antifoaming additive;
formulation B comprises the acrylic superfluidifier.

Typically, formulation A contains the following weight quantities for ammonium salt a), surfactant b) and antifoaming agent c): from 2 to 6 parts by weight, for example, 4 parts by weight of a); from 2 to 6 parts by weight, for example 4 parts by weight of b) ; from 1 to 4 parts by weight, for example 2 parts by weight of c). In order to obtain a volume of additive such as to facilitate the operations of incorporation into cements, formulation A may be added to suitable quantities of the filler material ("mineral additive", for example metakaolin) required for preparing the cementitious compositions or the pre-mixes.

Preparation of the cementitious compositions is according to conventional procedures and using conventional equipment, by mixing the hydraulic binder and remaining ingredients with water, typically in ambient conditions, for example at a temperature of between approximately +10°C and +40°C, for example between +15° and +25°C.

The elements of the additive system are incorporated in the cementitious mixtures at any stage of the preparation of the latter, preferably in the form of two separate fractions (formulations A and B).

The temperature at which formulation A is added depends upon the viscosity of the formulation itself. In the case of high viscosity, formulation A may be previously heated to a temperature generally ranging from 30°C to 40°C.

Formulation A is preferably premixed with the hydraulic binder in the dry state, or with a mineral filler in the dry state, before being mixed with water and before the remaining ingredients are added.

Preferably, formulation A is pre-dispersed dry in a mineral filler, such as metakaolin, and the resulting material is then evenly dispersed in the hydraulic binder.

In particular, formulation A may be premixed with the total quantity of filler required for the preparation of the cementitious mixture, this quantity ranging, for example, from 5 wt% to 15 wt%, and typically being approximately 10 wt% with respect to the weight of the hydraulic binder in the dry state.

Preferably, formulation A is added to an aliquot of the total filler required for the mixture, the so-called "master", which may vary, for example, from approximately 1% to 5%, being for example approximately 2.5 wt% with respect to the weight of the hydraulic binder in the dry state.

The pre-dispersion of formulation A in an aliquot of filler enables a considerable reduction in the volumes of materials to be pre-mixed, at the same time facilitating also the subsequent phase of homogenisation with the cement.

The homogenisation of the *"master"* with the cement, and the possible addition of the mineral extenders (inert aggregates and mineral additives) may also be carried out directly in the concrete mixer, by dry-premixing all the solid components of the cementitious composition for approximately 2-3 minutes, and subsequently adding the quantity of water and of formulation B (acrylic superfluidifier) necessary for preparing the composition.

This system is even more advantageous because it enables slow volumes of mineral extender to be handled and is thus suited for the preparation of concretes in either fixed or mobile (i.e., truck) concrete mixers.

Formulation B (acrylic additive) is preferably incorporated in the cementitious mixture at the end, as final ingredient, being typically added to the mixing water, which is preferably added in portions to the cementitious mixture containing the remaining ingredients.

The superfluidifying compositions according to the present invention afford the following unexpected advantages:
- they enable cementitious mixtures, for example concretes, to be obtained that are endowed with satisfactory characteristics of workability and fluidity both at the initial working times and subsequently, for at least 30-45 minutes, corresponding in particular to a workability according to class S4 of the UNI 9858 standard for at least 30-45 minutes;
- they enable low water/binder weight ratios to be adopted, in particular ratios not higher than 0.4, for example approximately 0.35-0.4 parts by weight of water per part by weight of cement (hydraulic binder) in the dry state;
- they enable cementitious compositions, in particular concretes, to be obtained that are endowed with high mechanical strength, presenting, for example, values of compression strength at 1, 2, 7 and 28 days of at least 35, 50, 65, and 70 MPa, respectively, typically of between 35 and 40 MPa at 1 day, between 45 and 55 MPa at 2 days, between 50 and 60 MPa at 3 days, between 60 and 70 MPa at 7 days and between 70 and 85 MPa at 28 days;
- in particular, they enable values of mechanical strength to be obtained at 28 days that are unexpectedly higher than those of the specimens containing formulation A alone, for example values of compression strength at 28 days of at least 70 MPa;
- they enable cementitious compositions, in particular concretes, to be obtained with values of absolute gravity of at least 2400 kg/m³, corresponding to air contents lower than 1% volume/volume.

The percentage of air was calculated on the basis of the values of the absolute gravity determined according to the UNI 6394 standard, Part 1.

Below are given a few examples in order to provide a non-limiting illustration of the present invention.

### EXPERIMENTAL PART

### EXAMPLE I: Tests on concrete

### Materials

1. Cement: Italbianco ® CEM 52.5 R (Italcementi), the chemical analysis of which is given in Table 1 350 kg/m³

**TABLE 1 -**

| **Cement CEM 52.5R ITALBIANCO ® (ITC)** | |
|---|---|
| Chemical analysis | |
| Fire loss | 3.87% w/w |
| Luminance | 89.9% |
| Dominant wavelength | 569 nm |
| Purity | 2.3% w/w |
| X-ray spectrometric analysis | |
| SiO₂ | 21.66% w/w |
| Al₂O₃ | 3.63% w/w |
| Fe₂O₃ | 0.16% w/w |
| CaO | 65.00% w/w |
| MgO | 1.05% w/w |
| SO₃ | 3.26% w/w |
| Na₂ O | 0.67% w/w |
| K₂O | 0.14% w/w |
| SrO | 0.06% w/w |
| Mn₂O₃ | <0.04% w/w |
| P₂O₅ | 0.10% w/w |
| TiO₂ | 0.03% w/w |
| w/w = weight/weight | |

1A. Water/binder ratio: in the present text is meant the weight ratio between the mixing water and the sum of the cement and possible metakaolin or other filler.
2. Aggregates
Light white marble from the Apuane Alps of the area of Carrara, divided into 10 distinct sizes; continuous-type granulometric curve with granulometric maximum = 20 mm 1900 kg/m³
3. Mineral extenders:
Metakaolin Metastar® 501 ECC: 10 wt% with respect to the cement: 35 kg/m³
4. Photocatalyst:
Titanium dioxide A-HR® micron Tioxide 7 kg/m³
5. Superfluidifying composition:
Formulation A0, liquid; w/w % with respect to the dry cement: 0.5%-1.3%
B) Formulation B: commercial acrylic additive Mapefluid®X-404;
   w/w % with respect to the dry cement: 1.5%-2.0%
C) small quantities of antifoaming agent Airplast® 251

### Equipment:

1. For the preparation of the pre-mixes:
   - "biendor" mixer with 1-litre beaker (Waring)
   - 5-litre intensive mixer (Eirich)
2. For the preparation of the concrete:
   50-litre vertical-axis concrete mixer, with rotating movement

### Method of addition of additives to the mixtures:

a) Dry pre-mixing of formulation A with the cement:
   In a laboratory "blendor", quantities of cement sufficient for the preparation of the concrete were prepared. All the cement required for the mixture received addition of formulation A.
b) Pre-dispersion of formulation A in the metakaolin:
   Two distinct methodologies were adopted, using a laboratory blendor:
   i) in the first case, formulation A was dispersed in the entire volume of the metakaolin required for the preparation of the concrete (10 wt% with respect to the cement);
   ii) in the second case, formulation A was dispersed in lower quantities of metakaolin, corresponding to 5 wt% and 2.5 wt% with respect to the cement in the dry state.

After the above addition, the metakaolin was mixed with the cement necessary for the preparation of the concrete, using an Eirich intensive mixer.

### - Formulation B (acrylic superfluidifier):

The additive B was added directly in the concrete mixer as the last component, together with the antifoaming agent.

### Reference cementitious compositions containing the acrylic additive alone (formulation B).

Various specimens of cementitious compositions were prepared which had a base of white cement Italbianco ® (Italcementi) (pastes, mortars and concretes) and contained the acrylic additive alone, and reference compositions devoid of the said additive, having the characteristics specified above in the legends of Figures 1, 2 and 3.

### Concretes containing the multicomponent additive system of the present invention (formulation A + formulation B) and reference compositions containing formulation A alone

Various specimens of concrete were prepared by mixing the hydraulic binder and the remaining ingredients with water, in the quantities specified above, in ambient conditions (approximately +20°C to +30°C).

The proportioning of the additives, with reference to the commercial products as such, and the water/hydraulic binder ratios are given in Tables 2 and 3 for to the two procedures of addition of formulation A described above.

Specimens from 1 to 8 are concrete specimens according to the present invention; specimens C1, C2, and C3 are reference concrete specimens containing the additive A alone and without acrylic superfluidifier.

**TABLE 2 -**

| **Cement dry-premixed with formulation A** | | | |
|---|---|---|---|
| Mixture | Additive A (% with respect to binder) | Additive B (% with respect to binder) | water/binder |
| 1 | 0.50 | 1.5 | 0.45 |
| 2 | 0.65 | 1.8 | 0.40 |
| 3 | 0.60 | 2.0 | 0.43 |
| 4 | 0.65 | 1.8 | 0.38 |
| C1 | 0.65 | --- | 0.50 |

**TABLE 3 -**

| **Cement dry-premixed with metakaolin to which formulation A had been previously added** | | | | |
|---|---|---|---|---|
| Mixture | Additive A (% with respect to binder) | Additive B (% with respect to binder) | Water/binder | % metakaolin with addition of formulation A (% with respect to binder) |
| 5 | 1.30 | 1.8 | 0.35 | 10 |
| 6 | 0.65 | 1.8 | 0.36 | 10 |
| 7 | 0.65 | 1.8 | 0.40 | 5 |
| 8 | 0.65 | 1.8 | 0.40 | 2.5 |
| C2 | 1.00 | --- | 0.44 | 10 |
| C3 | 1.30 | --- | 0.36 | 10 |

### Analysis of the characteristics of the mixtures

Fresh-state tests: Determinations of absolute gravity, slump over time, and behaviour under vibration were carried out on mixtures of concretes prepared as described above in the fresh state (i.e., within approximately 60 minutes of mixing the corresponding ingredients with water).

The absolute gravity was determined according to the UNI 6394 Standard, Part 1.

The behaviour under vibration was determined by assessing visually the degree of segregation of the mixtures.

The workability loss was evaluated by measuring the slump ("slump test") according to the UNI 9418 standard, at the times indicated in the Table.

Table 4 presents the values of absolute gravity, in kg/m³, and behaviour under vibration expressed as excellent, good, satisfactory or poor.

**TABLE 4**

| Mixture | absolute gravity (kg/m³) | Behaviour under vibration |
|---|---|---|
| Cement pre-mixed with | A | |
| 1 | 2416 | + + |
| 2 | 2430 | + + |
| 3 | 2411 | + + |
| 4 | 2450 | + |
| C1 | --- | --- |

| Cement pre-mixed with metakaolin to which formulation A had been added | | |
|---|---|---|
| 6 | 2449 | + + |
| 7 | 2424 | + + |
| 8 | 2424 | + + |
| C2 | ---- | + |
| C3 | | + |
| Legend: +++ excellent ++ good + satisfactory - poor | | |

### Results

- The absolute gravity value generally proved higher than 2400 kg/m³, corresponding to an air content lower than 1% volume/volume.

The behaviour under vibration was on average good, and satisfactory only for a few mixtures.

The reference specimens C1-C3 presented an unsatisfactory behaviour under vibration, or in any case a behaviour inferior to that of the concrete specimens containing the superfluidifying composition according to the present invention.

Slump Test: The slump values, expressed as reduction in the height in centimetres of the cone of concrete are given in Tables 5 and 6 and presented in graphic form in Figures 7, 8 and 9.

**TABLE 5 -**

| **Cement dry-premixed with formulation A** | | | | | | |
|---|---|---|---|---|---|---|
| Time (min) | | | | | | |
| Mixture | 0 | 10 | 20 | 30 | 45 | 60 |
| **1** | 19 | 14 | 9.5 | 7 | 6.5 | 5.5 |
| **2** | 22 | 22 | 21 | 16.5 | 15 | 14 |
| **3** | 20 | 15.5 | 12.5 | 11 | 10 | 9 |
| **4** | >22 | >22 | >22 | >22 | | |
| **C1** | 11.5 | 2.5 | | | | |

**TABLE 6 -**

| **Cement dry-premixed with metakaolin to which formulation A had been added** | | | | | | | | | | |
|---|---|---|---|---|---|---|---|---|---|---|
| **Time (min)** | | | | | | | | | | |
| **Mixture** | **0** | **10** | **20** | **30** | **45** | **60** | **75** | **90** | **120** | **150** |
| **6** | >22 | >22 | 22 | 20 | 17 | 17 | 16 | | | |
| **7** | 22 | 22 | 21.5 | 20 | 18 | 15 | | 13 | 11 | 10 |
| **8** | 21 | 19 | 18 | 16 | 16 | 15 | | 14 | 11 | |
| **C2** | 10 | 1 | | | | | | | | |
| **C3** | >22 | >22 | >22 | >22 | >22 | >22 | | | | |

### Results

The use of formulation A in combination with the acrylic additive B significantly reduced the workability loss over time, which, instead, was found when the acrylic additive B alone was used, as illustrated in Figure 9.

The use of 0.65% of formulation A plus 1.8% of formulation B, with formulation A dry-premixed with cement or metakaolin, enabled the concrete to be maintained in the consistency class S4 up to approximately 45 minutes.

It was possible to operate with a water/binder ratio ≤ 0.4

Tests in the hardened state

Compression strength - Various specimens of concrete were prepared according to the UNI 6127 standard. Compression strength was determined according to the UNI 6132-72 standard.

The results obtained are presented in Tables 7 and 8, and in Figures 10 and 11.

**TABLE 7**

| **Cement dry-premixed with formulation A** | | | | | | | |
|---|---|---|---|---|---|---|---|
| **Mixture** | **24 h** | **2 days** | **3 days** | **4 days** | **5 days** | **7 days** | **28 days** |
| **1** | 29.1 | 44.8 | 49.3 | / | / | 59.5 | 68.8 |
| **2** | 28.6 | 48.8 | 55.4 | / | / | 66.1 | 78.6 |
| **3** | 26.0 | 47.5 | / | / | 54.4 | 65.6 | 75.5 |
| **4** | / | / | / | 58.8 | / | 64.2 | / |
| **C1** | 30.2 | 32.4 | / | / | / | 46.0 | 51.7 |

**TABLE 8**

| **Cement dry-premixed with metakaolin to which formulation A had been added** | | | | | | | | |
|---|---|---|---|---|---|---|---|---|
| **Mixture** | **24 h** | **30 h** | **40 h** | **44 h** | **2 days** | **3 days** | **7 days** | **28 days** |
| **6** | 36.4 | 45.8 | / | / | 57.5 | 60.7 | 73.3 | 86.9 |
| **7** | 38.4 | 45.9 | / | / | 53.2 | 55.6 | 66.5 | 78.5 |
| **8** | 40.3 | / | / | / | 52.4 | 55.6 | 66.9 | 80.3 |
| **C3**** | / | / | 24.9 | 31.4 | 36.4 | / | 62.4 | 67.0 |

| | | | | | | | | |
|---|---|---|---|---|---|---|---|---|
| ** not ejectable at expiry of 24 h | | | | | | | | |

### Comments on results

The concretes prepared with the superfluidifying composition comprising 0.65% of formulation A plus 1.8% of formulation B, in which formulation A had been pre-mixed with metakaolin, presented compression strength values at 1, 2, 3 and 7 days of 36-40, 52-57, 56-61 and 66-73 MPa, respectively, with compression strength values at 28 days of 75 MPa or higher.

At 1 day, the compression strength was 10-15% lower than that of a concrete having the same composition and the same water/binder ratio (at 20°C). However, already at 30 hours the values were similar, in the region of 45 MPa (at 20°C).

It is important to note that the reference specimens containing formulation A alone show compression strength values at 28 days that are significantly lower than those of the specimens according to the present invention, containing both formulation A and formulation B.

Retarding effect: Formulation A in quantities as low as 1.3% (specimen C3) yields retardation in setting/hardening such as not to enable ejection of the test specimens at 24 hours. At 40 hours the compression strength values were lower than those of the test specimens containing 0.65% of formulation A plus 1.8% of formulation B (specimens 6, 7, 8) prepared with water/cement ratios that were equal or even higher.

Specimen C3 at 2 days showed a compression strength R_{c} lower than that of specimens 6, 7, and 8 at 24 hours.

The use of formulation A made possible the utilization of acrylic superfluidifiers in the white cement-based cementitious mixtures, thus eliminating the drastic loss of workability observed in the first 10 minutes of working when the acrylic additive B alone was used.

In the experimental conditions adopted, the optimal proportioning of the two products was as follows: 0.65% of formulation A plus 1.8% of formulation B; this made it possible to maintain the concrete in the consistency class S4 up to approximately 45 minutes.

The favourable results obtained by dry premixing of formulation A with an aliquot of metakaolin, corresponding to 2.5 wt% with respect to the cement, are particularly important for the industrial application of the superfluidifying compositions studied: with this addition procedure, the volumes of metakaolin to which formulation A is to be added undergo, in fact, a significant reduction, and at the same time the homogenization in the industrial plant of the "master" is rendered more effective.

The properties of the additive system according to the invention may be further highlighted in the ensuing Examples II and III, which refer to measurements of consistency over time carried out according to the UNI 7044 standard. These measurements represent an index of the workability of the cementitious mixtures. Example IV refers to slump measurements according to UNI 9418 standard, carried out on concrete.

### EXAMPLE II

This consisted of a series of tests carried out on mortar.

Each mortar was prepared with the following ingredients:
450 g of white cement CEM 52.5R (Italbianco ®);
1350 g of aggregate: light white marble form the area of Carrara, divided into two sizes, of 0-1 mm and 1-3 mm.

The mortars were prepared according to the EN 196/1 standard, using a Hobart mixer.

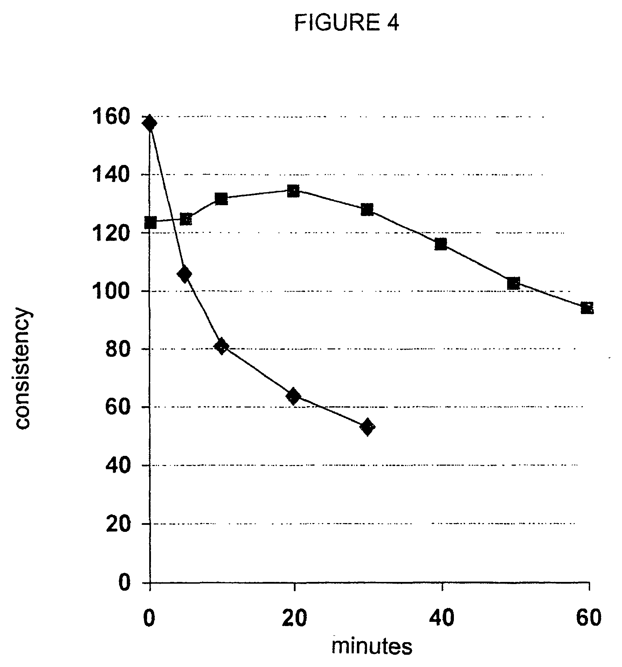

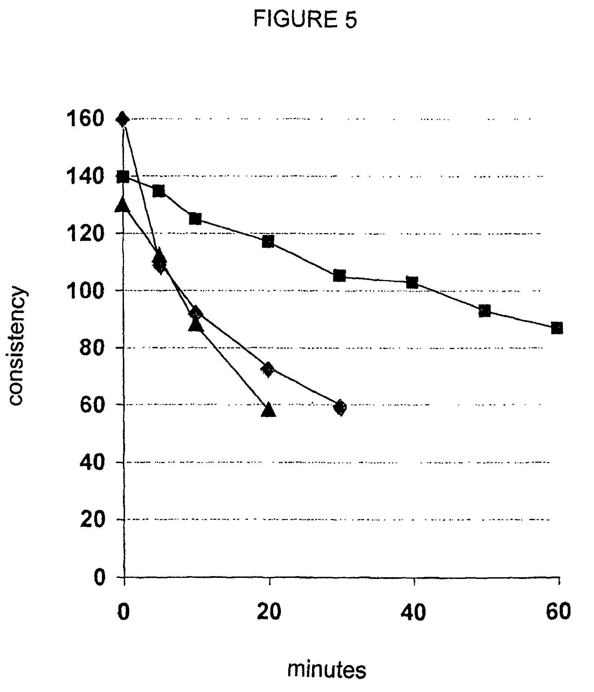

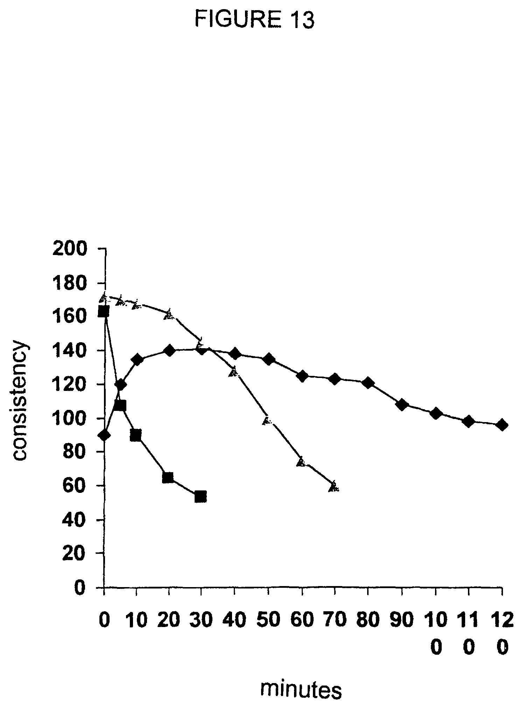

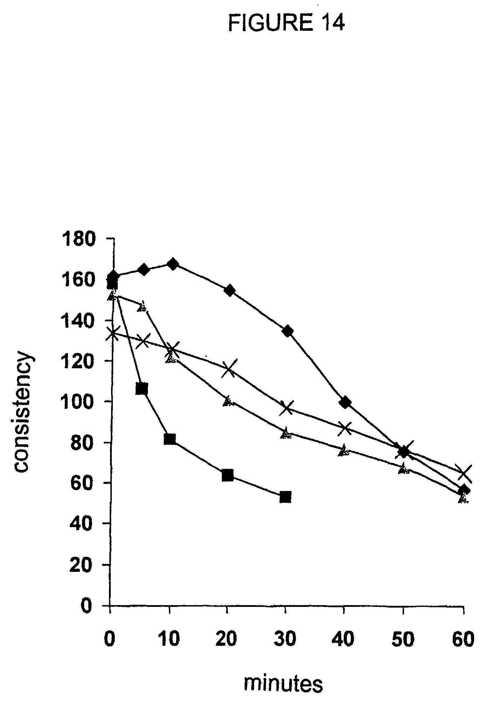

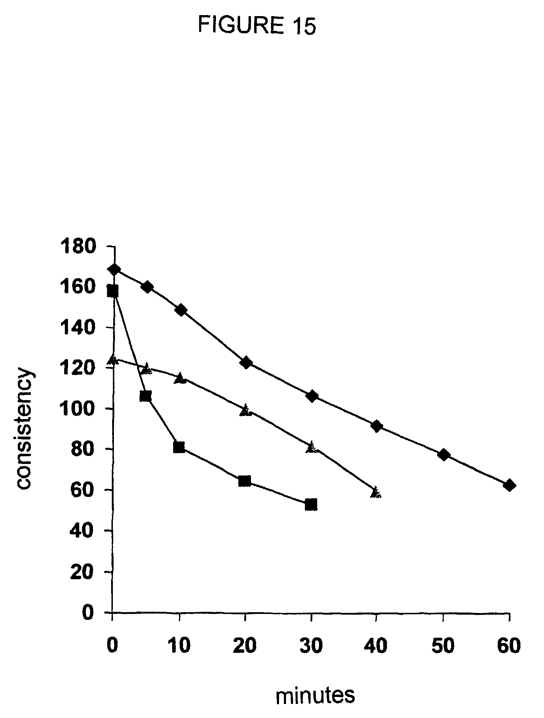

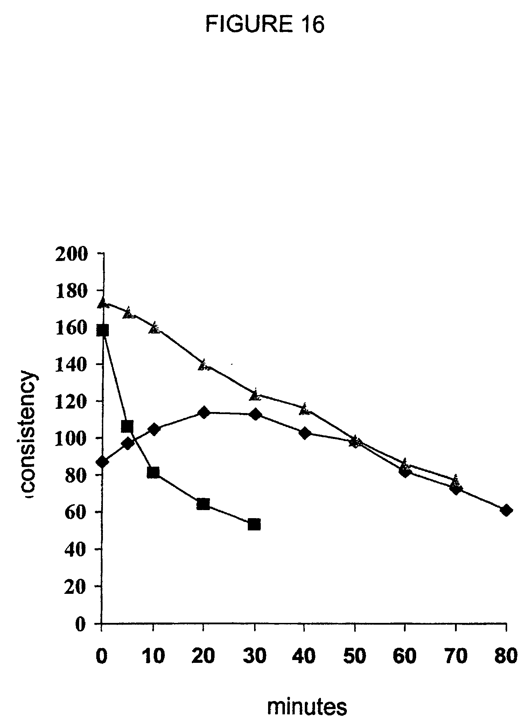

The results, expressed as workability curves, are shown in graphic form in Figures 4 and 5, and 13-16.

To each mortar the fluidifying-effect additive system was added. The latter consisted of:
formulation A0, dry pre-mixed in a laboratory blendor;
an acrylic superfluidifier, again added to the mixing water.

The doses of the additives are expressed as weight percent with respect to the weight of the cement.

Formulation A was prepared at the moment of use, by mixing the components in the relative percentage ratios indicated in Table 9.

The components used in the formulations are commercially available products.

The ammonium salts of formula (I) that are the subject of the present invention were prepared by mixing components 1 and 2 indicated in the Table. Formulation A0 contained an ammonium salt of formula (la) consisting of a diamine dioleate (product commercially available under the name INIPOL 002).

**TABLE 9 -**

| Composition of the formulations | | | | | | | | |
|---|---|---|---|---|---|---|---|---|
| **Formul. A** | **Component 1** | | **Component 2** | | **Surfactant** | | **Antifoam. Agent** | |
| | Product | % | Product | % | Product | % | Product | % |
| A0 | Inipol 002 | | | 40 | NP6 | 40 | Airplast 251 | 20 |
| A1 | Oleic acid | 29 | Diammin C2 | 11 | Nonfix 5 | 40 | Airplast 251 | 20 |
| A2 | Oleic acid | 30 | Diammin S15 | 10 | Nonfix 5 | 40 | Koster K/9P | 20 |
| A3 | Oleic acid | 30 | Triethylamine | 10 | Nonfix 2 | 40 | Airplast 251 | 20 |
| A4 | Oleic acid | 30 | Triethylamine | 10 | NP6 | 40 | Airplast 251 | 20 |
| A5 | Linoleic acid | 30 | Triethylamine | 10 | Nonfix 5 | 40 | Airplast 251 | 20 |
| A6 | Oleic acid | 30 | Triethylamine | 10 | Nonfix 11011 | 40 | Airplast 251 | 20 |
| A7 | Oleic acid | 30 | Triethylamine | 10 | Biodac 2/32 | 40 | Airplast 251 | 20 |
| A8 | Oleic acid | 19 | Hexadecyltrimethyl ammonium hydroxide | 21 | Nonfix 5 | 40 | Airplast 251 | 20 |
| A9 | Oleic acid | 30 | Tetramethyl ammonium hydroxide | 10 | Nonfix 5 | 40 | Airplast 251 | 20 |
| A10 | Oleic acid | 37 | Triethylamine | 13 | Biodac 2/32 | 50 | --- | --- |
| A11 | Linoleic acid | 20 | Diammin C-11 | 10 | Nonfix 5 | 30 | Airplast 251 | 40 |

### EXAMPLE III

This consisted of a series of tests carried out on mortar.

Each mortar was prepared with the following ingredients:
- 450 g of grey cement CEM I 52.5R (Ultracem);
- 1350 g of aggregate: German-type normalized silica sand, in compliance with the ENI 196/1 standard.

The preparation procedures for the mortars and for addition of the additives were the same as those adopted for Example I.

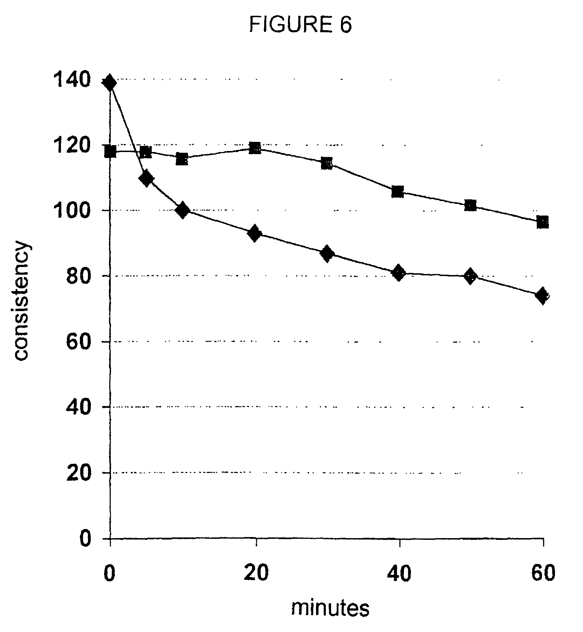

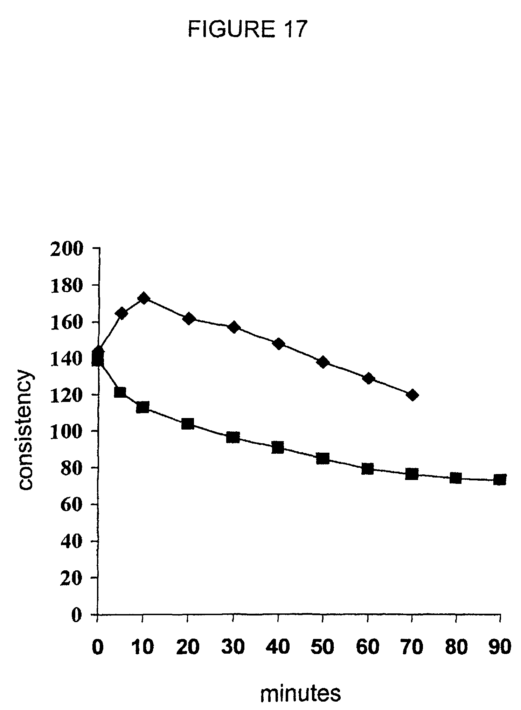

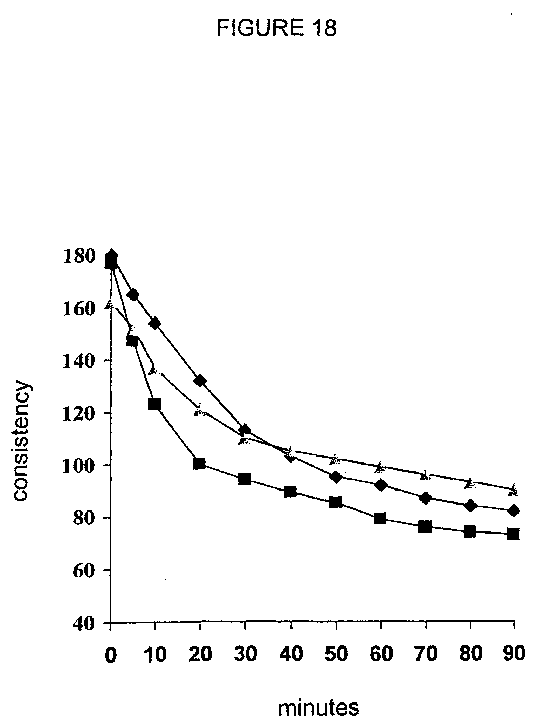

The results are given in the graphs of Figures 6 and 17-18.

### EXAMPLE IV

This consisted of a test carried out on concrete.

The concrete was prepared with the following ingredients:
- 350 kg/m³ of white cement CEM 52.5R (Italbianco ®);
- 1900 kg/m³ of aggregate: light white marble from the area of Carrara, divided into ten different sizes; continuous-type granulometric curve, with granulometric maximum of 20 mm;
- 35 kg/m³ of mineral extenders: metakaolin Metastar 501ECC;
- 7 kg/m³ of photocatalyst: titanium dioxide A-HR micron Tioxide.

Formulation A5 was pre-mixed with the metakaolin. The acrylic superfluidifier was added to the mixing water.

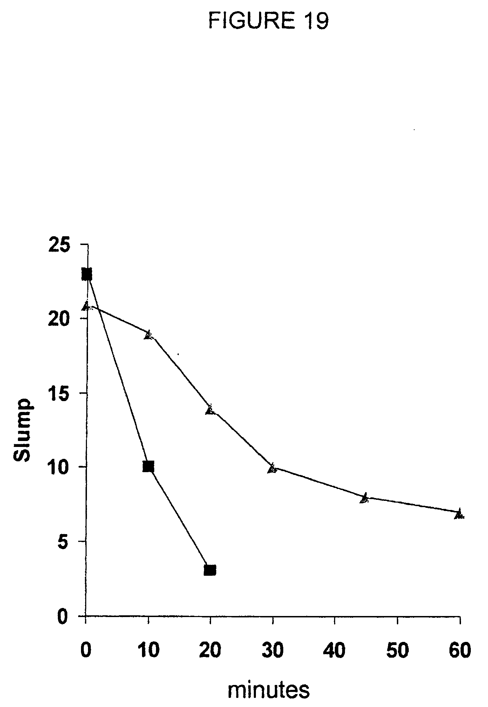

The result is given in the graph form in Figure 19.

## Claims

1. Superfluidifying additive for cementitious compositions, comprising:
(i) at least one ammonium salt of formula (I), 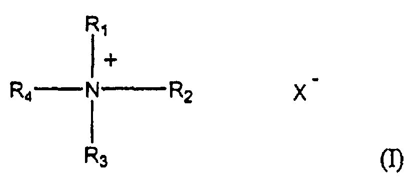 in which **R**_{**1**}**, R**_{**2**}**, R**_{**3**}**,** independently of one another, are chosen from among:
- hydrogen,
- a saturated or unsaturated, linear or branched alkyl group having from 1 to 22 carbon atoms;
- a polyoxyalkylene chain containing *n* repetitive units of structural formula (II), and *m* repetitive units of structural formula (III) 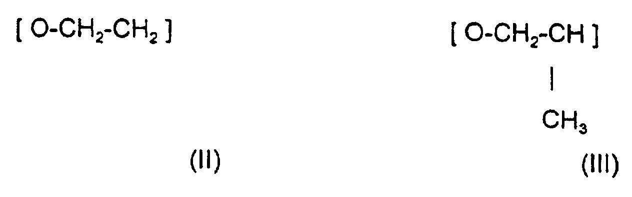 where *m* and *n*, independently of one another, are integers comprised between 0 and 50, and (*m* + *n*) is an integer comprised between 2 and 50, and where the said units may be present randomly in the said chain;
- a saturated or unsaturated, linear or branched alkyl group having from 1 to 22 carbon atoms, possibly substituted with one or more polyoxyalkylene chains as defined above;
**R**_{**4**} is chosen from between:
- a group having -(CH₂)ₚ N R₅R₆ structure, where p is an integer comprised between 1 and 7, and in which R₅ and R₆ may be, independently of one another: (a) hydrogen, (b) saturated or unsaturated, linear or branched alkyl groups having from 1 to 22 carbon atoms, or (c) a polyoxyalkylene chain as defined above;
- a saturated or unsaturated, linear or branched alkyl group having from 1 to 12 carbon atoms; and
**X** is an anion which neutralizes, either partially or totally, the charge of the ammonium ion;
(ii) least one acrylic superfluidifier;
(iii) at least one surfactant; and
(iv) possibly one or more antifoaming agents.

2. Additive according to Claim 1, where the substituents R₁, R₂, R₃, in formula (I) independently of one another, are chosen from among:
hydrogen,
a saturated or unsaturated, linear or branched alkyl group having from 1 to 16 carbon atoms,
a polyoxyalkylene chain as defined above, where *m* is equal to 0, and *n* is comprised between 2 and 15,
a saturated or unsaturated, linear or branched alkyl group having from 12 to 18 carbon atoms, possibly substituted with one or more polyoxyalkylene chains as defined above, where *m* is equal to 0, and *n* is comprised between 2 and 15.

3. Additive according to Claim 1, where the ammonium ion represented in formula
(I) is chosen from among: triethylammonium, tetramethylammonium, hexadecyltrimethylammonium, or else an ion of formula (la), where R₅ and *n* have the meanings indicated above

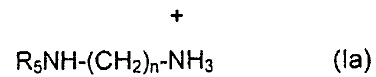

4. Additive according to any one of Claims 1-3, where X⁻ represents at least one anion chosen from between OH⁻ and R₇-COO⁻, in which R₇ is a saturated or unsaturated, linear or branched alkyl group having from 1 to 22 carbon atoms.

5. Additive according to Claim 4, where X⁻ represents at least one anion chosen from among oleate, stearate or linoleate.

6. Additive according to any one of Claim 1-5, where the surfactant (iii) is a non-ionic surfactant having a hydrophilic/lipophilic balance (HLB) of between 5.5 and 15.

7. Additive according to any one of Claims 1-6, formulated in two separate compositions A) and B), having the following compositions: Formulation A):
containing the ammonium salt (i), surfactant (ii), and possibly the antifoaming agent (iv);
Formulation B): containing the acrylic superfluidifier (ii).

8. Additive according to Claim 7, in which formulation A) is diluted with an inert filler material.

9. High-fluidity and high-workability cementitious composition comprising a hydraulic binder, water, and a superfluidifying additive as described in claim 1.

10. Cementitious composition according to Claim 9, containing the following weight percentages of components with respect to the weight of the hydraulic binder in the dry state: from 0.04% to 1% of ammonium salt (i); from 0.04% to 1% of surfactant (iii); from 0.02% to 0.3% of antifoaming additive (iv); from 0.3% to 3% of acrylic superfluidifier (ii).

11. Cementitious composition according to any one of Claims 9-10, in which the hydraulic binder is a white cement.

12. Cementitious composition according to any one of Claims 9-11, further containing particles of compounds having a photocatalytic action.

13. Cementitious composition according to Claim 12, in which the compound having photocatalytic action is titanium dioxide or one of its precursors, prevalently in the form of anatase.

14. Cementitious composition according to any one of Claims 9-13, represented by a concrete or by a mortar.

15. Cementitious composition according to any one of Claims 9-14, having a water/hydraulic binder weight ratio not higher than 0.4.

16. Procedure for the preparation of a high-fluidity and high-workability cementitious composition, **characterized in that** a hydraulic binder, the additive described in Claim 1, and water in suitable quantitites are mixed together to obtain a fluid mixture.

17. Procedure according to Claim 16, in which the additive is used in the form of two separate formulations A) and B) having the following compositions:
A): containing the ammonium salt (i), surfactant (iii), and the possible antifoaming additive (iv), possibly mixed with an inert filler material;
B): containing the acrylic superfluidifier (ii).

18. Procedure according to Claim 17, comprised the following steps:
mixing the formulation A) with the hydraulic binder in the dry state;
dispersing the formulation B) in the mixing water;
adding of the mixture obtained in step b- to the mixture obtained in step a-, and
stirring until the mixture is homogeneous.

19. Procedure according to any of Claims 16-18, in which a water/hydraulic binder weight ratio is used that is lower than or equal to 0.4.

20. Pre-mix in the dry state for cementitious compositions, comprising at least one hydraulic binder, and a superfluidifying additive as described in Claim 1 and/or particles of compounds having a photyocatalytic action.

21. Cement item, laid and hardened, containing the additive for cements described in Claim 1, and possibly particles of compounds having a photocatalytic action.

22. Use of an additive as described in Claim 1 as superfluidifier for cements.

## Patentansprüche

1. Superfluidisierungsadditiv für zementartige Zusammensetzungen, das folgendes umfasst:
(i) mindestens ein Ammoniumsalz der Formel (I) 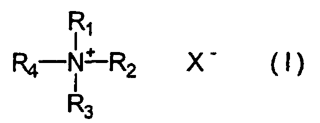 worin R₁, R₂ und R₃ unabhängig voneinander ausgewählt sind aus
- Wasserstoff,
- einer gesättigten oder ungesättigten, linearen oder verzweigten Alkylgruppe mit 1-22 Kohlenstoffatomen,
- einer Polyalkylenkette, die n sich wiederholende Einheiten der Strukturformel (II) und m sich wiederholende Einheiten der Strukturformel (III) enthalten: 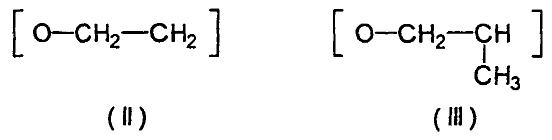
worin m und n unabhängig voneinander ganze Zahlen zwischen 0 und 50 darstellen und (m + n) eine ganze Zahl zwischen 2 und 50 ist, und worin diese Einheiten zufällig verteilt in der Kette vorhanden sein können,
- eine gesättigte oder ungesättigte, lineare oder verzweigte Alkylgruppe mit 1-22 Kohlenstoffatomen, die gegebenenfalls mit einer oder mehreren Polyoxyalkylenketten, wie oben definiert, substituiert ist,
R₄ ist ausgewählt aus
- einer Gruppe der Struktur -(CH₂)ₚNR₅R₆, worin p eine ganze Zahl zwischen 1 and 7 ist und worin R₅ und R₆ unabhängig voneinander (a) Wasserstoff, (b) gesättigte oder ungesättigte, lineare oder verzweigte Alkylgruppen mit 1-22 Kohlenstoffatomen oder (c) Polyoxyalkylenketten, wie oben definiert, darstellen können,
- einer gesättigten oder ungesättigten, linearen oder verzweigten Alkylgruppe mit 1-12 Kohlenstoffatomen und
X ist ein Anion, das die Ladung des Ammoniumions entweder vollständig oder teilweise neutralisiert;
(ii) mindestens einen acrylischen Superfluidisierer;
(iii) mindestens ein Tensid, und
(iv) gegebenenfalls einen oder mehrere Antischaumbildner.

2. Additiv gemäss Anspruch 1, worin die Substituenten R₁, R₂ und R₃ in Formel (I) unabhängig voneinander ausgewählt sind aus Wasserstoff, einer gesättigten oder ungesättigten, linearen oder verzweigten Alkylgruppe mit 1-16 Kohlenstoffatomen, einer Polyalkylenkette, wie oben definiert, worin m 0 ist und n zwischen 2 und 15 ist, einer gesättigten oder ungesättigten, linearen oder verzweigten Alkylgruppe mit 12-18 Kohlenstoffatomen, die gegebenenfalls mit einer oder mehreren Polyoxyalkylenketten, wie oben definiert, substituiert ist, worin m 0 ist und n zwischen 2 und 15 ist.

3. Additiv gemäss Anspruch 1, worin das Ammoniumion in Formel (I) ausgewählt ist aus Triethylammonium, Tetramethylammonium, Hexadecyltrimethylammonium oder einem anderen Ion der Formel (Ia), worin R₅ und n die oben angegebenen Bedeutungen besitzen:

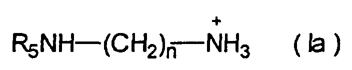

4. Additiv gemäss mindestens einem der Ansprüche 1 bis 3, worin X⁻ mindestens ein Anion, ausgewählt aus OH⁻ und R₇-COO⁻ darstellt, worin R₇ eine gesättigte oder ungesättigte, lineare oder verzweigte Alkylgruppe mit 1-22 Kohlenstoffatomen ist.

5. Additiv gemäss Anspruch 4, worin X⁻ mindestens ein Anion repräsentiert, das ausgewählt ist aus Oleat, Stearat oder Linoleat.

6. Additiv gemäss mindestens einem der Ansprüche 1 bis 5, worin das Tensid (iii) ein nicht-ionisches Tensid mit einem Hydrophil/Lipophil-Gleichgewicht (HLB) von zwischen 5,5 und 15 ist.

7. Additiv gemäss mindestens einem der Ansprüche 1 bis 6, das in zwei separaten Zusammensetzungen (A) und (B) mit den folgenden Zusammensetzungen formuliert ist: Formulierung (A) enthält das Ammoniumsalz (i), das Tensid (ii) und gegebenenfalls den Antischaumbildner (iv); Formulierung (B) enthält den Acryl-Superfluidisierer (ii).

8. Additiv gemäss Anspruch 7, worin Formulierung (A) mit einem inerten Füllmaterial verdünnt ist.

9. Hochfluide und hochverarbeitbare, zementartige Zusammensetzung, die ein hydraulisches Bindemittel, Wasser und ein Superfluidisierungsadditiv gemäss Anspruch 1 umfasst.

10. Zementartige Zusammensetzung gemäss Anspruch 9, die die folgenden Gewichtsprozentsätze der Komponenten in bezug auf das Gewicht des hydraulischen Bindemittels in trockenem Zustand enthält: 0,04-1 % Ammoniumsalz (i); 0,04-1 % Tensid (iii); 0,02-0,3 % Antischaumbildungsadditiv (iv) und 0,3-3 % Acryl-Superfluidisierer (ii).

11. Zementartige Zusammensetzung gemäss mindestens einem der Ansprüche 9 bis 10, worin das hydraulische Bindemittel ein weisser Zement ist.

12. Zementartige Zusammensetzung gemäss mindestens einem der Ansprüche 9 bis 11, die ferner Teilchen von Verbindungen mit fotokatalytischer Wirkung enthält.

13. Zementartige Zusammensetzung gemäss Anspruch 12, worin die Verbindung mit fotokatalytischer Wirkung Titandioxid oder einer seiner Vorläufer, vorwiegend in Form von Anatas, ist.

14. Zementartige Zusammensetzung gemäss mindestens einem der Ansprüche 9 bis 13, die einen Beton oder einen Mörtel darstellt.

15. Zementartige Zusammensetzung gemäss mindestens einem der Ansprüche 9 bis 14 mit einem Wasser/hydraulischer Binder-Gewichtsverhältnis von nicht mehr als 0,4.

16. Verfahren zur Herstellung einer hochfluiden und hochverarbeitbaren, zementartigen Zusammensetzung, **dadurch gekennzeichnet, dass** ein hydraulisches Bindemittel, das in Anspruch 1 beschriebene Additiv und Wasser in geeigneten Mengen miteinander vermischt werden, wodurch eine fluide Mischung erhalten wird.

17. Verfahren gemäss Anspruch 16, worin das Additiv in Form von zwei getrennten Formulierungen (A) und (B) mit den folgenden Zusammensetzungen verwendet wird: (A) enthält das Ammoniumsalz (i), das Tensid (iii) und das optionale Antischaumbildungsadditiv (iv), gegebenenfalls vermischt mit einem inerten Füllmaterial; (B) enthält den Acryl-Superfluidisierer (ii).

18. Verfahren gemäss Anspruch 17, das die folgenden Schritte umfasst: Vermischen der Formulierung (A) mit dem hydraulischen Bindemittel in trockenem Zustand; Dispergieren der Formulierung (B) in dem Mischwasser; Zugabe der Mischung aus Schritt (b) mit der Mischung aus Schritt (a), und Rühren bis die Mischung homogen ist.

19. Verfahren gemäss mindestens einem der Ansprüche 16 bis 18, worin ein Wasser/hydraulisches Bindemittel-Gewichtsverhältnis verwendet wird, das ≤ 0,4 ist.

20. Trockene Vormischung für zementartige Zusammensetzungen, die mindestens ein hydraulisches Bindemittel und ein Superfluidisierungsadditiv gemäss Anspruch 1 und/oder Teilchen von Verbindungen mit fotokatalytischer Wirkung umfasst.

21. Zementprodukt, gelegt (laid) and gehärtet, das das Additiv für Zemente gemäss Anspruch 1 und gegebenenfalls Teilchen von Verbindungen mit fotokatalytischer Wirkung enthält.

22. Verwendung eines Additivs gemäss Anspruch 1 als Superfluidisierer für Zemente.

## Revendications

1. Additif superfluidifiant pour compositions de ciment, comprenant :
(i) au moins un sel d'ammonium de formule (I), 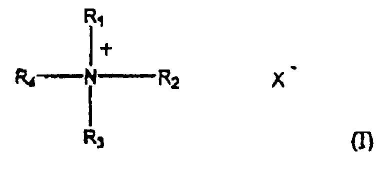 dans laquelle R₁, R₂ et R₃, indépendamment l'un de l'autre, sont choisis parmi :
- un atome d'hydrogène,
- un groupe alkyle saturé ou insaturé, linéaire ou ramifié ayant entre 1 et 22 atomes de carbone ;
- une chaîne polyalkylène contenant *n* motifs répétés de formule structurale (II), et m motifs répétés de formule structurale (III) 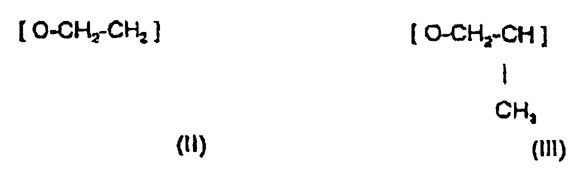
où *m* et *n*, indépendamment l'un de l'autre, sont des nombres entiers compris entre 0 et 50, et (*m* + *n*) est un nombre entier compris entre 2 et 50, et où lesdits motifs peuvent étre présents de manière statistique dans ladite chaîne ;
- un groupe alkyle saturé ou insaturé, linéaire ou branché ayant entre 1 et 22 atomes de carbone, éventuellement substitué avec une ou plusieurs chaînes polyalkylène comme défini ci-dessus ;
R₄ est choisi parmi :
- un groupe ayant la structure -(CH₂)ₚNR₅R₆, dans laquelle p est un nombre entier compris entre 1 et 7, et dans laquelle R₅ et R₆ peuvent être, indépendamment l'un de l'autre : (a) un atome d'hydrogène, (b) des groupes alkyle saturés ou insaturés, linéaires ou ramifiés ayant entre 1 et 22 atomes de carbone, ou (c) une chaîne polyalkylène telle que définie ci-dessus ;
- un groupe alkyle saturé ou insaturé, linéaire ou ramifié ayant entre 1 et 12 atomes de carbone ; et
X est un anion qui neutralise, soit partiellement soit totalement, la charge de l'ion ammonium;
(ii) au moins un superfluidifiant acrylique ;
(iii) au moins un tensioactif ; et
(iv) éventuellement un ou plusieurs anti-moussants.

2. Additif selon la revendication 1, dans lequel les substituants R₁, R₂ et R₃ dans la formule (I), indépendamment l'un de l'autre, sont choisis parmi :
un atome d'hydrogène,
un groupe alkyle saturé ou insaturé, linéaire ou ramifié ayant entre 1 et 16 atomes de carbone,
une chaîne polyalkylène telle que définie ci-dessus, dans laquelle m est égal à 0, et n est compris entre 2 et 15,
un groupe alkyle saturé ou insaturé, linéaire ou ramifié ayant entre 12 et 18 atomes de carbone, éventuellement substitué avec une ou plusieurs chaînes polyalkylène comme défini ci-dessus, dans lesquelles *m* est égal à 0, et *n* est compris entre 2 et 15.

3. Additif selon la revendication 1, dans lequel l'ion ammonium représenté dans la formule (I) est choisi parmi : le triéthylammonium, le tétraméthylammonium, l'hexadécyltriméthylammonium, ou bien un ion de formule (Ia) dans laquelle R₅ et *n* ont le sens indiqué ci-dessus,

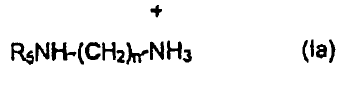

4. Additif selon l'une quelconque des revendications 1 à 3, dans lequel X⁻ représente au moins un anion choisi parmi OH⁻ et R₇-COO⁻, dans lequel R₇ est un groupe alkyle saturé ou insaturé, linéaire ou ramifié ayant entre 1 et 22 atomes de carbone.

5. Additif selon la revendication 4, dans lequel X⁻ représente au moins un anion choisi parmi l'oléate, le stéarate ou le linoléate.

6. Additif selon Tune quelconque des revendications 1 à 5, dans lequel le tensioactif (iii) est un tensioactif non ionique ayant un équilibre hydrophile/lipophile (HLB) compris entre 5,5 et 15.

7. Additif selon l'une quelconque des revendications 1 à 6, formulé en deux compositions distinctes A) et B), ayant les compositions suivantes :
Formulation A) : contenant le sel d'ammonium (i), le tensioactif (ii), et éventuellement l'anti-moussant (iv);
Formulation B) : contenant le superfluidifiant acrylique (ii),

8. Additif selon la revendication 7, dans lequel la formulation A) est diluée avec un matériel de charge inerte.

9. Composition de ciment de fluidité et maniabilité élevées comprenant un liant hydraulique, de l'eau, et un additif superfluidifiant comme décrit dans la revendication 1.

10. Composition de ciment selon la revendication 9, contenant les pourcentages suivants en poids de composants par rapport au poids du liant hydraulique à l'état anhydre : de 0,04 à 1% de sel d'ammonium (i) ; de 0,04 à 1% de tensioactif (iii); de 0,02 à 0,3% d'additif anti-moussant (iv); de 0,3 à 3% de superfluidifiant acrylique (ii).

11. Composition de ciment selon l'une quelconque des revendications 9 et 10, dans laquelle le liant hydraulique est un ciment blanc.

12. Composition de ciment selon l'une quelconque des revendications 9 à 11, contenant en outre des particules de composés ayant une action photocatalytique.

13. Composition de ciment selon la revendication 12, dans laquelle le composé ayant une action photocatalytique est le dioxyde de titane ou un de ses précurseurs, couramment sous la forme d'anatase.

14. Composition de ciment selon l'une quelconque des revendications 9 à 13, représentée par un béton ou par un mortier.

15. Composition de ciment selon Tune quelconque des revendications 9 à 14, ayant un rapport en poids d'eau/liant hydraulique qui n'est pas supérieur à 0,4.

16. Procédure pour la préparation d'une composition de ciment à fluidité et maniabilité élevées, **caractérisée en ce qu'**un liant hydraulique, l'additif décrit dans la revendication 1, et de l'eau en quantités adaptées sont mélangés ensemble pour donner un mélange liquide.

17. Procédure selon la revendication 16, dans laquelle l'additif est utilisé sous la forme de deux formulation distinctes A) et B) ayant les compositions suivantes :
A) : contenant le sel d'ammonium (i), le tensioactif (iii), et l'éventuel additif anti-moussant (iv), éventuellement mélangés avec un matériel de charge inerte ;
B): contenant le superfluidifiant acrylique (ii).

18. Procédure selon la revendication 17, comprenant les étapes suivantes :
mélange de la formulation A) avec le liant hydraulique à l'état anhydre ;
dispersion de la formulation B) dans l'eau de mélange ;
addition du mélange obtenu dans l'étape b au mélange obtenu dans l'étape a, et agitation jusqu'à ce que le mélange soit homogène.

19. Procédure selon l'une quelconque des revendications 16 à 18, dans laquelle un rapport en poids d'eau/liant hdraulique est utilisé qui est inférieur ou égal à 0,4.

20. Pré-mélange à l'état anhydre pour les compositions de ciment, comprenant au moins un liant hydraulique, et un additif superfluidifiant tel que décrit dans la revendication 1, et/ou les particules de composés ayant une action photocatalytique.

21. Matériel de ciment, posé et durci, contenant l'additif pour les ciments décrit dans la revendication 1, et éventuellement les particules de composés ayant une action photocatalytique.

22. Utilisation d'un additif tel que décrit dans la revendication 1 comme superfluidifiant pour les ciments.
